# EUROPEAN PATENT APPLICATION

(11) **EP 4 156 059 A1**
(43) Date of publication of application: **29.03.2023**
(21) Application number: 21913184.4
(22) Date of filing: 03.09.2021
(51) Int. Cl.: G06Q 20/06, G06Q 20/10

(54) **DIGITAL CURRENCY DIRECTIONAL TRANSACTION METHOD AND SYSTEM**

(30) Priority: 31.12.2020 CN 202011637488
(71) Applicant: Tendyron Corporation, Beijing 100083 (CN)
(72) Inventor: LI, Dongsheng, Beijing 100083 (CN)
(74) Representative: DehnsGermany Partnerschaft von Patentanwälten
(86) International application number: PCT/CN2021/116381
(87) International publication number: WO 2022/142437

(57) **Abstract**

Provided are a digital currency directional transaction method and system. A payer wallet receives a directional digital currency issued by an issuing device, and selects a digital currency combination from all stored digital currencies for payment when paying the directional digital currency. Only when the selected digital currency combination satisfies a condition, the payment will be made to the payee wallet. The payee wallet receives payment information and stores the payment information in response to the verification to complete the directional digital currency payment, so as to ensure a dedicated use of funds.

## Description

### CROSS-REFERENCES TO RELATED APPLICATIONS

This application claims priority to Chinese Patent Application No. "202011637488.0", titled "DIGITAL CURRENCY DIRECTIONAL TRANSACTION METHOD AND SYSTEM", filed by Tendyron Corporation on December 31, 2020.

### FIELD

The present disclosure relates to the field of electronic technologies, and in particular, to a digital currency directional transaction method and system.

### BACKGROUND

The state special fund subsidy is a fund allocated by the state or relevant departments or higher-level departments with special designated purposes or special purposes. Such funds will require separate accounting, earmarked funds for exclusive use and cannot be used for other purposes. In the traditional mode, after the fund subsidy is issued to an account, a special agency is often required to review and supervise the use of funds, which is labor-intensive and prone to fraud. How to use the technical characteristics of digital currency to better ensure the dedicated use of funds is a question worthy of study.

### SUMMARY

The present disclosure aims to solve the above problems.

A main object of the present disclosure is to provide a digital currency directional transaction method.

Another object of the present disclosure is to provide a digital currency directional transaction system.

In order to achieve the above objects, the technical scheme of the present disclosure is specifically implemented in this way.

One aspect of the present disclosure provides a digital currency directional transaction method, including: receiving, by a payer wallet, a directional digital currency issued by an issuing device, in which the directional digital currency is generated by writing a directional identifier into the digital currency through the issuing device, and the directional identifier includes at least one of a currency use attribute, a payee attribute, and a currency circulation attribute; storing, by the payer wallet, the directional digital currency; establishing, by the payer wallet, a communication with and a payee wallet, and receiving, by the payer wallet, a collecting instruction transmitted by the payee wallet, in which the collecting instruction at least includes payment amount, payee identity information, currency use information, and payee information; verifying, by the payer wallet, a payee wallet identity based on the payee identity information, and selecting, in response to the payee wallet identity being verified, a digital currency combination to be paid based on the payment amount; verifying, by the payer wallet, for each of all digital currencies in the digital currency combination, whether the currency use attribute conforms to the currency use information, whether the payee attribute conforms to the payee information, and whether the currency circulation attribute conforms to a preset attribute; determining whether there is a remaining digital currency combination in response to verifying, by the payer wallet for each of all the digital currencies in the digital currency combination, that the currency use attribute fails to conform to the currency use information, the payee attribute fails to conform to the payee information, and/or the currency circulation attribute fails to conform to the preset attribute, in which when it is determined that there is a remaining digital currency combination, an operation of selecting the digital currency combination to be paid based on the payment amount is performed; and in which when it is determined that there is no remaining digital currency combination, the transaction is terminated; generating payment information in response to verifying, by the payer wallet for each of all the digital currencies in the digital currency combination, that the currency use attribute conforms to the currency use information, the payee attribute conforms to the payee information, and the currency circulation attribute conforms to the preset attribute, in which the payment information at least includes the digital currency combination, and a payment data link generated by performing a payment operation on the digital currency combination; transmitting, by the payer wallet, the payment information to the payee wallet; verifying, by the payee wallet, for each of all the digital currencies in the digital currency combination, whether each of the currency use attribute, the payee attribute, and the currency circulation attribute satisfies a preset limitation; verifying the payment data link in response to verifying, by the payer wallet for each of all the digital currencies in the digital currency combination, that each of the currency use attribute, the payee attribute, and the currency circulation attribute satisfies the preset limitation, and storing, in response to the payment data link being verified, the payment information; and terminating the transaction in response to verifying, by the payee wallet for each of all the digital currencies in the digital currency combination, that at least one of the currency use attribute, the payee attribute, and the currency circulation attribute fails to satisfy the preset limitation.

Another aspect of the present disclosure provides a digital currency directional transaction system including: a payer wallet configured to: receive a directional digital currency issued by an issuing device, in which the directional digital currency is generated by writing a directional identifier into the digital currency through the issuing device, and the directional identifier includes at least one of a currency use attribute, a payee attribute, and a currency circulation attribute; store the directional digital currency; establish a communication with a payee wallet, and receive a collecting instruction transmitted by the payee wallet, in which the collecting instruction at least includes payment amount, payee identity information, currency use information, and payee information; verify a payee wallet identity based on the payee identity information, and select, in response to the payee wallet identity being verified, a digital currency combination to be paid based on the payment amount; verify, for all digital currencies in the digital currency combination, whether the currency use attribute conforms to the currency use information, whether the payee attribute conforms to the payee information, and whether the currency circulation attribute conform to a preset attribute; determine whether there is a remaining digital currency combination in response to verifying for each of all the digital currencies in the digital currency combination, that the currency use attribute fails to conform to the currency use information, the payee attribute fails to conform to the payee information, and/or the currency circulation attribute fails to conform to the preset attribute, in which when it is determined that there is a remaining digital currency combination, an operation of selecting the digital currency combination to be paid based on the payment amount is performed; and in which when it is determined there is no remaining digital currency combination, the transaction is terminated; generate payment information in response to verifying, for each of all the digital currencies in the digital currency combination, that the currency use attribute conforms to the currency use information, the payee attribute conforms to the payee information, and the currency circulation attribute conforms to the preset attribute, in which the payment information at least includes the digital currency combination, and a payment data link generated by performing a payment operation on the digital currency combination; and transmit the payment information to the payee wallet; and a payee wallet configured to: verify, for each of all the digital currencies in the digital currency combination, whether each of the currency use attribute, the payee attribute, and the currency circulation attribute satisfies the preset limitation; verify the payment data link in response to verifying, for each of all the digital currencies in the digital currency combination, that each of the currency use attribute, the payee attribute, and the currency circulation attribute satisfies the preset limitation, and store, in response to the payment data link being verified, the payment information; and terminate the transaction in response to verifying, for each of all the digital currencies in the digital currency combination, that at least one of the currency use attribute, the payee attribute, and the currency circulation attribute of fails to satisfy the preset limitation..

It can be seen from the above technical solutions provided by the present disclosure that the present disclosure provides a digital currency directional transaction method and system. The payer wallet receives the directional digital currency issued by the issuing device, and when paying the directional digital currency, the payer wallet selects the digital currency combination from all stored digital currencies for payment, and only when the selected digital currency combination satisfies the conditions, payment will be made to the payee wallet. The payee wallet receives the payment information and stores the payment information in response to the verification to complete the payment of directional digital currency, so as to ensure the dedicated use of funds.

### BRIEF DESCRIPTION OF THE DRAWINGS

In order to clearly explain technical solutions of embodiments of the present disclosure, drawings used in the description of the embodiments are briefly described below. Obviously, the drawings as described below are merely some embodiments of the present disclosure. Based on these drawings, other drawings can be obtained by those of ordinary skill in the art without creative labor.
FIG. 1 is a flowchart of a digital currency directional transaction method according to an embodiment of the present disclosure;
FIG. 2 is a schematic structural diagram of a digital currency directional transaction system according to an embodiment of the present disclosure.

### DESCRIPTION OF EMBODIMENTS

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

The embodiments of the present disclosure will be described in further detail below with reference to the accompanying drawings.

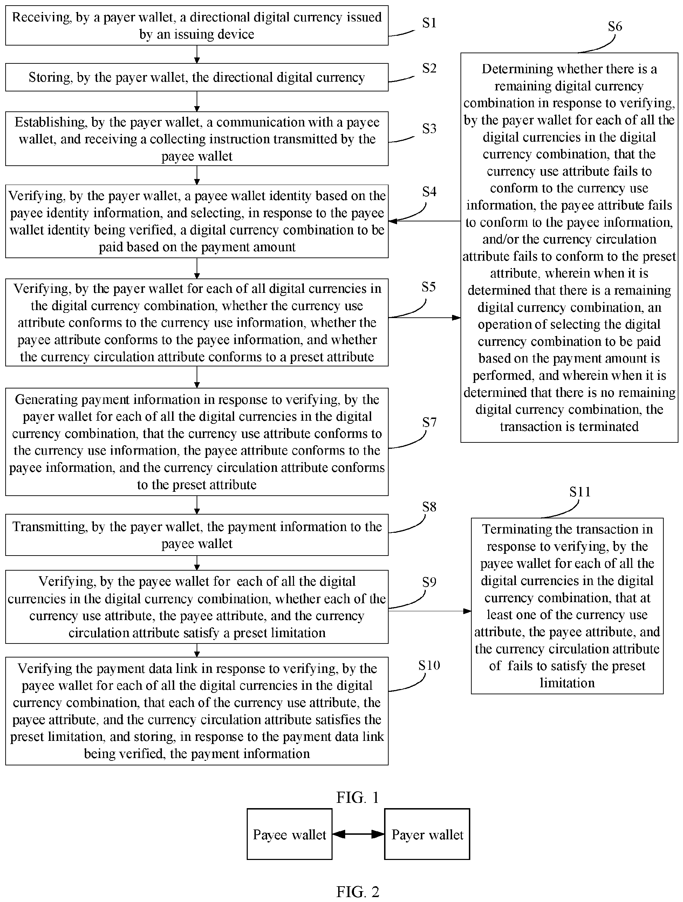

FIG. 1 shows a flowchart of a digital currency directional transaction method according to an embodiment of the present disclosure. Referring to FIG. 1, the digital currency directional transaction method according to the embodiment of the present disclosure includes the following steps.

At S 1, a directional digital currency issued by an issuing device is received by a payer wallet, in which the directional digital currency is generated by the writing a directional identifier into a digital currency through the issuing device, and the directional identifier includes at least one of a currency use attribute, a payee attribute, and a currency circulation attribute.

Specifically, when the digital currency with directional nature such as a national special fund subsidy is issued, the directional identifier will be written into the digital currency by the issuing device to generate the directional digital currency, so that when the directional digital currency is used in the future, only directional payment may be made, so as to better ensure the dedicated use of funds.

The directional identifier may include the currency use attribute, the payee attribute, and the currency circulation attribute. The currency use attribute is used to define a use of the digital currency, such as scientific research use, equipment purchase use, consultant fees, etc., and the currency use attribute may be determined as desired. The payee attribute is used to define a payee of the digital currency payment, such as a university, an organization in a certain field, a technology enterprise, etc., and the payee attribute may also be determined as desired. The currency circulation attribute is used to determine whether the digital currency can be circulated. When the digital currency circulation attribute is able to be circulated, it means that the directional digital currency may be circulated, and when the digital currency attribute is unable to be circulated, it cannot be circulated.

At S2, the directional digital currency is stored by the payer wallet.

Specifically, a wallet is a device for storing the digital currency and paying for the digital currency. The payer wallet is capable of storing the directional digital currency. The payer wallet in the present disclosure is a wallet used by an object issued by the issuing device. For example, when the issuing device is issued to a university, the payer wallet is a university wallet.

At S3, a communication is established between the payer wallet and a payee wallet, and a collecting instruction transmitted by the payer wallet is received by the payee wallet, in which the collecting instruction at least includes payment amount, payee identity information, currency use information, and payee information.

A wired or wireless connection may be established between the payer wallet and the payee wallet. The wired connection may be, for example, a USB connection, and the wireless connection may be, for example, an NFC connection. The payer wallet and the payee wallet may be connected directly, or indirectly through a terminal, and the present disclosure is not limited thereto.

After the communication is established between the payer wallet and the payee wallet, the collecting instruction transmitted by the payer wallet is received by the payee wallet. The collecting instruction includes the payment amount, the payee identity information, the currency use information, and the payee information. For example, the collecting instruction may include: payment amount of 200,000 yuan, a certificate of the payee wallet, use information of a purchased device, and information that the payee is XX company, so that the payee wallet may be notified to verify whether the directional digital currency can be paid.

At S4, it is verified, by the payer wallet, the payee wallet identity based on the payee identity information, and a digital currency combination to be paid is selected based on the payment amount in response to the payee wallet identity being verified.

Specifically, when the payee wallet verifies the payee identity based on the payee identity information, for example, it may verify a certificate of the payee wallet. In response to the verification, it is confirmed whether the payee wallet identity is legal, and only when the payee wallet identity is legal, the digital currency combination to be paid will be selected. In the present disclosure, it is worth noting that the digital currency combination in the present disclosure may be one digital currency, or may be a combination formed by a plurality of digital currencies.

At S5, it is verified by the payer wallet, for each of all digital currencies in the digital currency combination, whether the currency use attribute conforms to the currency use information, whether the payee attribute conforms to the payee information, and whether the currency circulation attribute conforms to a preset attribute.

Specifically, after selecting the digital currency combination, the payer wallet will determine, for each of all digital currencies in the digital currency combination, whether the currency use attribute conforms to currency use information transmitted by the payee wallet, such as the use information of the purchased equipment, whether the payee attribute conforms to the payee information transmitted by the payee wallet, such as XX company, and whether the currency circulation attribute is able to be circulated.

At S6, it is determined whether there is a remaining digital currency combination in response to verifying, by the payer wallet for each of all the digital currencies in the digital currency combination, that the currency use attribute fails to conform to the currency use information, the payee attribute fails to conform to the payee information, and/or the currency circulation attribute fails to conform to the preset attribute, in which when there is the remaining digital currency combination, an operation of selecting the digital currency combination to be paid based on the payment amount is performed; and in which when there is no remaining digital currency combination, the transaction is terminated.

At S7, payment information is generated in response to verifying, by the payer wallet for each of all the digital currencies in the digital currency combination, that the currency use attribute conforms to the currency use information, the payee attribute conforms to the payee information, and the currency circulation attribute conforms to the preset attribute, in which the payment information at least includes the digital currency combination and a payment data link generated by performing a payment operation on the digital currency combination.

Specifically, it is determined whether there is the remaining digital currency in response to verifying, by the payer wallet for each of all the digital currencies in the digital currency combination, that the currency use attribute fails to conform to the currency use information, the payee attribute fails to conform to the payee information, or the currency circulation attribute is unable to be circulated. When it is determined that there is a remaining digital currency, the method is proceeded back to S4 in which the operation of selecting the digital currency combination to be paid based on the payment amount is performed, and it is determined whether the conditions are satisfied, until all the stored digital currencies are verified. When the conditions are not satisfied, it is considered that there is not enough digital currency payment, and the transaction is terminated, and when there is a digital currency combination that satisfies the conditions, the operation of generating the payment information in S7 is performed.

The payment information includes each digital currency in the digital currency combination, and a payment data link obtained by calculating the digital currency by the payer wallet. The payment data link may record information on this transaction.
At S8, the payment information is transmitted to the payee wallet by the payer wallet;
At S9, it is verified by the payee wallet, for each of all the digital currencies in the digital currency combination, whether the currency use attribute, the payee attribute, and the currency circulation attribute satisfy a preset limitation;
At S 10, the payment data link is verified in response to verifying, by the payee wallet for each of all the digital currencies in the digital currency combination, that each of the currency use attribute, the payee attribute, and the currency circulation attribute satisfies the preset limitation, and the payment information is stored in response to payment data link is verified;
At S 11, the transaction is terminated in response to verifying, by the payee wallet, for each of all the digital currencies in the digital currency combination, that at least one of the currency use attribute, the payee attribute, and the currency circulation attribute of fails to satisfy the preset limitation.

Specifically, after completing the payment operation, the payer wallet transmits the payment information to the payee wallet. At this time, the payee wallet will also verify, for each of all the digital currencies in the digital currency combination, whether the currency use attribute, the payee attribute, and the currency circulation attribute satisfy the preset limitation, that is, whether the currency use attribute conforms to the currency use information, whether the payee attribute conforms to the payee information, and whether the currency circulation attribute conforms to the preset attribute (that is, able to be circulated). When all are satisfied, the payment data link is verified to ensure that the transaction is authentic and valid, and the payment information is stored in response to the payment data link is verified. When any of the above conditions are not satisfied, the transaction will be terminated.

It can be seen that, through the digital currency directional transaction method according to the embodiment of the present disclosure, the payer wallet receives the directional digital currency issued by the issuing device, and selects the digital currency combination from all stored digital currencies for payment when paying the directional digital currency. Only when the selected digital currency combination satisfies the predetermined conditions, the payment will be made to the payee wallet. The payee wallet receives the payment information and then stores the payment information in response to the verification to complete the directional digital currency payment, so as to ensure the dedicated use of funds.

FIG. 2 shows a schematic structural diagram of a digital currency directional transaction system according to an embodiment of the present disclosure. The digital currency directional transaction system is applied to the above method. Only structures and functions of the digital currency directional transaction system are briefly described below, for other unresolved matters, please refer to the relevant description in the above digital currency directional transaction method. Referring to FIG. 2, the digital currency directional transaction system according to the embodiment of the present disclosure includes a payer wallet and a payee wallet.

The payer wallet is configured to: receive a directional digital currency issued by an issuing device, in which the directional digital currency is generated by writing a directional identifier into the digital currency through the issuing device, and the directional identifier incudes at least one of a currency use attribute, a payee attribute, and a currency circulation attribute; store the directional digital currency; establish a communication with a payee wallet, and receive a collecting instruction transmitted by the payee wallet, in which the collecting instruction at least includes payment amount, payee identity information, currency use information, and payee information; verify a payee wallet identity based on the payee identity information, and select, in response to the payee wallet identity being verified, a digital currency combination to be paid based on the payment amount; verify, for all digital currencies in the digital currency combination, whether the currency use attribute conforms to the currency use information, whether the payee attribute conforms to the payee information, and whether the currency circulation attribute conform to a preset attribute; determine whether there is a remaining digital currency combination in response to verifying, for each of all the digital currencies in the digital currency combination, that the currency use attribute fails to conform to the currency use information, the payee attribute fails to conform to the payee information, and/or the currency circulation attribute fails to conform to the preset attribute, when it is determined that there is a remaining digital currency combination, an operation of selecting the digital currency combination to be paid based on the payment amount is performed, and when it is determined that there is no remaining digital currency combination, the transaction is terminated; generate payment information in response to verifying, for each of all the digital currencies in the digital currency combination, that the currency use attribute conforms to the currency use information, the payee attribute conforms to the payee information, and the currency circulation attribute conforms to the preset attribute, in which the payment information at least includes the digital currency combination and a payment data link generated by performing a payment operation on the digital currency combination; and transmit the payment information to the payee wallet.

The payee wallet is configured to: verify, for each of all the digital currencies in the digital currency combination, whether each of the currency use attribute, the payee attribute, and the currency circulation attribute satisfies the preset limitation; verify the payment data link in response to verifying, for each of all the digital currencies in the digital currency combination, that each of the currency use attribute, the payee attribute, and the currency circulation attribute satisfies the preset limitation, and store the payment information response to the payment data link is verified; and terminate the transaction in response to verifying, for each of all the digital currencies in the digital currency combination that at least one of the currency use attribute, the payee attribute, and the currency circulation attribute of fails to satisfy the preset limitation.

It can be seen that, through the digital currency directional transaction system according to the embodiment of the present disclosure, the payer wallet receives the directional digital currency issued by the issuing device, and selects a digital currency combination from all stored digital currencies for payment when paying the directional digital currency. Only when the selected digital currency combination satisfies the conditions, the payment will be made to the payee wallet. The payee wallet receives the payment information and stores the payment information in response to the verification to complete the directional digital currency payment, so as to ensure the dedicated use of funds.

Although embodiments of present disclosure have been shown and described above, it should be understood that above embodiments are only illustrative, and cannot be construed to limit the present disclosure. It should be understood by those of ordinary skill in the art that changes, alternatives, and modifications may be made to the embodiments without departing from the principle and spirit of the present disclosure. The scope of the present disclosure is defined by the appended claims and their equivalents.

## Claims

1. A digital currency directional transaction method, comprising:
receiving, by a payer wallet, a directional digital currency issued by an issuing device, wherein the directional digital currency is generated by writing a directional identifier into the digital currency through the issuing device, and wherein the directional identifier comprises at least one of a currency use attribute, a payee attribute, and a currency circulation attribute;
storing, by the payer wallet, the directional digital currency;
establishing, by the payer wallet, a communication with and a payee wallet, and receiving, by the payer wallet, a collecting instruction transmitted by the payee wallet, wherein the collecting instruction at least comprises payment amount, payee identity information, currency use information, and payee information;
verifying, by the payer wallet, a payee wallet identity based on the payee identity information, and selecting, in response to the payee wallet identity being verified, a digital currency combination to be paid based on the payment amount;
verifying, by the payer wallet for each of all digital currencies in the digital currency combination, whether the currency use attribute conforms to the currency use information, whether the payee attribute conforms to the payee information, and whether the currency circulation attribute conforms to a preset attribute;
determining whether there is a remaining digital currency combination in response to verifying, by the payer wallet for each of all the digital currencies in the digital currency combination, that the currency use attribute fails to conform to the currency use information, the payee attribute fails to conform to the payee information, and/or the currency circulation attribute fails to conform to the preset attribute, wherein when it is determined that there is a remaining digital currency combination, an operation of selecting the digital currency combination to be paid based on the payment amount is performed; and wherein when it is determined that there is no remaining digital currency combination, the transaction is terminated;
generating payment information in response to verifying, by the payer wallet for each of all the digital currencies in the digital currency combination, that the currency use attribute conforms to the currency use information, the payee attribute conforms to the payee information, and the currency circulation attribute conforms to the preset attribute, wherein the payment information at least comprises the digital currency combination, and a payment data link generated by performing a payment operation on the digital currency combination;
transmitting, by the payer wallet, the payment information to the payee wallet;
verifying, by the payee wallet for each of all the digital currencies in the digital currency combination, whether each of the currency use attribute, the payee attribute, and the currency circulation attribute satisfies a preset limitation;
verifying the payment data link in response to verifying, by the payer wallet for each of all the digital currencies in the digital currency combination, that each of the currency use attribute, the payee attribute, and the currency circulation attribute satisfies the preset limitation, and storing, in response to the payment data link being verified, the payment information; and
terminating the transaction in response to verifying, by the payee wallet for each of all the digital currencies in the digital currency combination, that at least one of the currency use attribute, the payee attribute, and the currency circulation attribute fails to satisfy the preset limitation.

2. A digital currency directional transaction system, comprising:
a payer wallet configured to:
receive a directional digital currency issued by an issuing device, the directional digital currency being generated by writing a directional identifier into the digital currency through the issuing device, and the directional identifier comprising at least one of a currency use attribute, a payee attribute, and a currency circulation attribute;
store the directional digital currency;
establish a communication with a payee wallet, and receive a collecting instruction transmitted by the payee wallet, the collecting instruction at least comprising payment amount, payee identity information, currency use information, and payee information;
verify a payee wallet identity based on the payee identity information, and select, in response to that the payee wallet identity is verified, a digital currency combination to be paid based on the payment amount;
verify, for all digital currencies in the digital currency combination, whether the currency use attribute conforms to the currency use information, whether the payee attribute conforms to the payee information, and whether the currency circulation attribute conform to a preset attribute;
determine whether there is a remaining digital currency combination in response to verifying, for each of all the digital currencies in the digital currency combination, that the currency use attribute fails to conform to the currency use information, the payee attribute fails to conform to the payee information, and/or the currency circulation attribute fails to conform to the preset attribute, wherein when it is determined that there is a remaining digital currency combination, an operation for selecting the digital currency combination to be paid based on the payment amount is performed; and wherein when it is determined there is no remaining digital currency combination, the transaction is terminated;
generate payment information in response to verifying, for each of all the digital currencies in the digital currency combination, that the currency use attribute conforms to the currency use information, the payee attribute conforms to the payee information, and the currency circulation attribute conforms to the preset attribute, wherein the payment information at least comprises the digital currency combination, and a payment data link generated by performing a payment operation on the digital currency combination; and
transmit the payment information to the payee wallet; and
a payee wallet configured to:
verify, for each of all the digital currencies in the digital currency combination, whether each of the currency use attribute, the payee attribute, and the currency circulation attribute satisfies the preset limitation;
verify the payment data link in response to verifying, for each of all the digital currencies in the digital currency combination, that each of the currency use attribute, the payee attribute, and the currency circulation attribute satisfies the preset limitation, and store, in response to that the payment data link is verified, the payment information; and
terminate the transaction in response to verifying, for each of all the digital currencies in the digital currency combination, that at least one of the currency use attribute, the payee attribute, and the currency circulation attribute of fails to satisfy the preset limitation.
